# EUROPEAN PATENT APPLICATION

(11) **EP 4 080 477 A1**
(43) Date of publication of application: **26.10.2022**
(21) Application number: 19953597.2
(22) Date of filing: 29.11.2019
(51) Int. Cl.: G08B 21/10, G01V 1/00

(54) **EARTHQUAKE EARLY-WARNING AND MONITORING SYSTEM AND METHOD FOR NUCLEAR POWER PLANT**

(30) Priority: 18.11.2019 CN 201911126935
(71) Applicant: China Nuclear Power Engineering Co., Ltd., Shenzhen, Guangdong 518124 (CN); China General Nuclear Power Corporation, Shenzhen, Guangdong 518026 (CN); CGN Power Co., Ltd., Shenzhen, Guangdong 518026 (CN)
(72) Inventor: LI, Lei, Shenzhen, Guangdong 518100 (CN); LIU, Hong tao, Shenzhen, Guangdong 518100 (CN); LI, Tianyou, Shenzhen, Guangdong 518100 (CN); TIAN, Yajie, Shenzhen, Guangdong 518100 (CN)
(74) Representative: Greaves Brewster LLP
(86) International application number: PCT/CN2019/121839
(87) International publication number: WO 2021/097897

(57) **Abstract**

The present invention provides an earthquake early-warning and monitoring system and method for nuclear power plant. The earthquake early-warning and monitoring system for nuclear power plant includes an earthquake early-warning system (10) for sending an earthquake early-warning before an earthquake reaches the nuclear power plant, and an earthquake monitoring system (20) for reflecting the actual impact of an earthquake motion on the structure and equipment of the nuclear power plant. The earthquake early-warning system (10) includes an early-warning information receiving module (12) for receiving earthquake early-warning information sent by an earthquake network center; an early-warning information sending module (14) for sending the earthquake early-warning information amounting to an earthquake fortification intensity to a main control room earthquake early-warning module (16); and the main control room earthquake early-warning module (16) for sending an earthquake early-warning sound and light alarm in a main control room. The earthquake early-warning and monitoring system and method for nuclear power plant of the present invention can effectively integrate the earthquake early-warning information and the earthquake monitoring information of the nuclear power plant. The earthquake early-warning system and the earthquake monitoring system are independent of each other and affirm each other, thereby providing an early-warning for possible earthquakes and preventing unnecessary shutdown operations.

## Description

### FIELD OF THE INVENTION

The present invention belongs to the technical field of earthquake monitoring of nuclear power plants and, more particularly, relates to an earthquake early-warning and monitoring system and method for nuclear power plant.

### BACKGROUND OF THE INVENTION

According to the requirements of National Nuclear Power Plant Seismic Design and Appraisal (HAD 102-02), nuclear power plants under construction and in service in our country are equipped with Seismic Instrument Monitoring System (KIS) to monitor earthquake information in real time, send earthquake alarms, and measure and store earthquake data in real time, so that the necessity for an inspection of nuclear power plant shutdowns after an earthquake can be assessed. At the same time, dynamic properties of nuclear power plant structures, systems and components are collected, to evaluate the applicability degree of the analysis method for seismic design and qualification of buildings and equipment.

However, the earthquake monitoring system can only send an alarm and record the earthquake motion information when the earthquake motion has affected the nuclear power plant, but cannot realize the "early-warning" function. Main control room personnel and other personnel can only respond in rush after the earthquake motion affects the nuclear power plant, but cannot make preparation in advance.

"Earthquake early-warning" refers to the action of sending an alarm and taking measures before a strong earthquake has occurred and serious disaster still has not formed, and send an alarm several seconds to tens of seconds in advance to the fortified area before the earthquake wave has spread to the fortified area, to reduce local losses. At present, the China Earthquake Administration and the Sichuan Disaster Reduction Institute have established corresponding earthquake monitoring network successively, and the major engineering offices can establish corresponding early-warning terminals to receive earthquake early-warning information.

In view of the foregoing, what is needed, therefore, is to provide an earthquake early-warning and monitoring system and method for nuclear power plant having the founctions of early-warning and monitoring, so as to improve the reliability of nuclear power plant earthquake response.

### SUMMARY OF THE INVENTION

One object of the present invention is to provide an earthquake early-warning and monitoring system and method for nuclear power plant having the founctions of early-warning and monitoring, so as to improve the reliability of nuclear power plant earthquake response.

According to one embodiment of the present invention, an earthquake early-warning and monitoring system for nuclear power plant includes an earthquake early-warning system for sending an earthquake early warning before an earthquake reaches a nuclear power plant, and an earthquake monitoring system for reflecting actual impact of an earthquake motion on structure and equipment of the nuclear power plant;
the earthquake early-warning system includes:
an early-warning information receiving module, configured for receiving earthquake early-warning information sent by an earthquake network center, and sending the earthquake early-warning information to an early-warning information sending module;
the early-warning information sending module, configured for sending earthquake early-warning information amounting to an earthquake fortification intensity to a main control room earthquake early-warning module; and
the main control room earthquake early-warning module, configured for sending an earthquake early-warning sound and light alarm in the main control room.

According to one aspect of the present invention, the early-warning information sending module is further configured for sending the earthquake early-warning information to plant-wide personnel, to remind the plant-wide personnel to make corresponding preparations.

According to one aspect of the present invention, the early-warning information receiving module and the early-warning information sending module are set in an emergency command center of the nuclear power plant, and the earthquake early-warning information is sent to the plant-wide personnel via sending the earthquake early-warning information to plant-wide terminals through emergency communication system in the emergency command center.

According to one aspect of the present invention, the earthquake early-warning information sent by the early-warning information sending module to the plant-wide terminals includes all earthquake early-warning information received by the early-warning information sending module, and the plant-wide terminals includes at least one of broadcasters, personnel mobile phones, and dormitory set-top boxes throughout the nuclear power plant.

According to one aspect of the present invention, the earthquake early-warning information includes estimated intensity and arrival time of the earthquake, which is given by the earthquake network center according to pre-stored longitude and latitude of the nuclear power plant.

According to one aspect of the present invention, the earthquake early-warning information amounting to an earthquake fortification intensity refers to the earthquake early-warning information whose estimated earthquake intensity reaches the earthquake fortification intensity; the earthquake fortification intensity of the nuclear power plant is pre-stored in the early-warning information sending module, after the the early-warning information sending module receives the earthquake early-warning information sent by the early-warning information receiving module, the estimated earthquake intensity is compared with the earthquake fortification intensity, and the earthquake early-warning information that the estimated earthquake intensity amounting to he earthquake fortification intensity is sent to the main control room earthquake early-warning module.

According to one aspect of the present invention, the earthquake network center also pre-stores earthquake early-warning threshold of the nuclear power plant, only when the estimated earthquake intensity is higher than the earthquake early-warning threshold, the earthquake network center will send earthquake early-warning information to the nuclear power plant.

According to one aspect of the present invention, the main control room earthquake early-warning module is an alarm sound and light display device independent of the nuclear power plant control system.

According to one aspect of the present invention, the earthquake monitoring system includes an earthquake motion monitoring module, an earthquake motion information processing module and an earthquake motion display and alarm module, wherein the earthquake motion monitoring module is configured to monitor the earthquake motion and send the earthquake motion information to the earthquake motion information processing module; the earthquake motion information processing module is configured to receive and process the earthquake motion information, and send processed earthquake motion information to the earthquake motion display and alarm module; the earthquake motion display and alarm module is configured to display earthquake motion information and send an earthquake motion alarm.

According to one embodiment of the present invention, an earthquake early-warning and monitoring method for nuclear power plant includes the steps of:
receiving earthquake early-warning information sent by an earthquake network center;
sending the earthquake early-warning information amounting to an earthquake fortification intensity to a main control room earthquake early-warning module;
the main control room earthquake early-warning module sending a sound and light alarm for earthquake early-warning in the main control room, reminding operators in the main control room to pay attention to possible earthquake motion information and prepare for response in advance; and
the operators in the main control room continuously paying attention to the earthquake motion information of the earthquake monitoring system during the earthquake early-warning period, and determining whether to start an earthquake emergency response program according to post-earthquake procedures after an earthquake occurs.

According to one aspect of the present invention, when the earthquake early-warning information amounting to the earthquake fortification intensity is sent to the main control room earthquake early-warning module, the earthquake early-warning information is also sent to plant-wide personnel, and the plant-wide personnel make corresponding preparations according to the earthquake early-warning information.

According to one aspect of the present invention, the earthquake early-warning information is sent to the plant-wide personnel via sending the earthquake early-warning information to plant-wide terminals through emergency communication system in an emergency command center.

According to one aspect of the present invention, the plant-wide personnel making corresponding preparations according to the earthquake early-warning information includes: evacuation or suspension of work for personnel in high altitude, seaside or dangerous areas of the nuclear power plant, and preparations for evacuation and disaster response for rest personnel in the the nuclear power plant.

According to one aspect of the present invention, the earthquake motion information of the earthquake monitoring system that the operator of the main control room continuously paying attention to during the earthquake early-warning period is earthquake motion information displayed by the earthquake motion display and alarm module, including an earthquake peak acceleration and cumulative absolute velocity of the monitoring point.

According to one aspect of the present invention, the earthquake early-warning information includes estimated intensity and arrival time of the earthquake, which is given by the earthquake network center according to pre-stored longitude and latitude of the nuclear power plant.

According to one aspect of the present invention, the earthquake early-warning information amounting to the earthquake fortification intensity refers to the earthquake early-warning information whose estimated earthquake fortification intensity amounting to the earthquake fortification intensity; the earthquake fortification intensity of the nuclear power plant is pre-stored in the early-warning information sending module, after the the early-warning information sending module receives the earthquake early-warning information sent by the early-warning information receiving module, the estimated earthquake intensity is compared with the earthquake fortification intensity, and the earthquake early-warning information that the estimated earthquake fortification intensity amounting to the earthquake fortification intensity is sent to the main control room earthquake early-warning module.

According to one aspect of the present invention, the earthquake early-warning and monitoring method for nuclear power plant further includes: after the earthquake early-warning is lifted, properly handling relevant matters according to the actual situation of the earthquake, wherein the earthquake early-warning is lifted refers to end of the arrival time in the earthquake early-warning information and the earthquake wave reaches the nuclear power plant.

Compared with the prior art, the present invention has at least the following advantages:
1) The earthquake early-warning system was introduced into the nuclear power plant for the first time, and the early-warning monitoring method combining the earthquake early-warning system and the earthquake monitoring system was provided, which can improve the reliability of the earthquake response of the nuclear power plant.
2) The earthquake early-warning system and the monitoring system are independent of each other, and the warning information of the earthquake early-warning system and the monitoring system can affirm each other, thereby improving the reliability of the earthquake response of the nuclear power plant.
3) The earthquake early-warning information comes from the national earthquake monitoring department. There is no need to set up a separate earthquake motion monitoring network around the nuclear power plant, which reduces the cost of reconstruction and investment of the nuclear power plant, and the earthquake early-warning information is more reliable.
4) A variety of early-warning means, such as plant-wide broadcasting, mobile phone text messages and TV set-top boxes are provided, to notify everyone in the power plant to the greatest extent, so as to provide a certain pre-earthquake early warning time for all personnel in the power plant, which can greatly reduce industrial accidents other than nuclear accidents and casualties during strong earthquake.

### BRIEF DESCRIPTION OF THE DRAWINGS

The earthquake early-warning and monitoring system and method for nuclear power plant of the present invention will be described in detail in conjunction with the accompanying drawings and specific embodiments, wherein:
Fig. 1 is a block diagram of an earthquake early-warning and monitoring system for nuclear power plant according to one embodiment of the present invention;
Fig. 2 is a block diagram of an earthquake early-warning system of the earthquake early-warning and monitoring system for nuclear power plant according to one embodiment of the present invention;
Fig. 3 is a block diagram of the earthquake monitoring system of the earthquake early-warning and monitoring system for nuclear power plant according to one embodiment of the present invention;
Fig. 4 is a diagram of an application example of the earthquake early-warning and monitoring system for nuclear power plant according to one embodiment of the present invention; and
Fig. 5 is a flowchart of an earthquake early-warning and monitoring method for nuclear power plant according to one embodiment of the present invention.

### DETAILED DESCRIPTION OF THE INVENTION

In order to make the objects, technical solutions and beneficial technical effects of the present invention clearer, the present invention will be further described in detail below with reference to the accompanying drawings and specific embodiments. It should be understood that, the specific embodiments described in this specification are only for explaining the present invention, rather than for limiting the present invention.

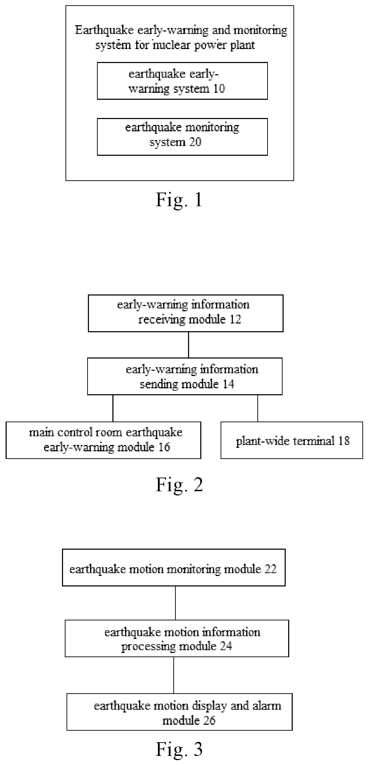

Referring to the embodiment shown in Fig. 1, the earthquake early-warning and monitoring system for nuclear power plant includes an earthquake early-warning system 10 for sending an earthquake early warning before an earthquake reaches a nuclear power plant, and an earthquake monitoring system 10 for reflecting actual impact of an earthquake motion on structures and equipments of the nuclear power plant.

Referring to Fig. 2, the earthquake early-warning system 10 includes an early-warning information receiving module 12, an early-warning information sending module 14, a main control room earthquake early-warning module 16, and a plant-wide terminal 18.

The early-warning information receiving module 12 is configured to receive the earthquake early-warning information sent by an earthquake network center 60, and send the earthquake early-warning information to an early-warning information sending module 14. Specifically, the earthquake early-warning information includes the estimated earthquake fortification intensity and arrival time, and preferably also includes the epicenter distance given by the China Earthquake Network Center 60 according to the pre-stored longitude and latitude of the nuclear power plant. The present invention establishes an earthquake early-warning system for nuclear power plant based on the existing earthquake network center 60 in China, and does not require separate earthquake motion monitoring instruments around the nuclear power plant. It should be noted that the earthquake network center 60 also pre-stores the earthquake early-warning threshold of the nuclear power plant. Only when the estimated earthquake fortification intensity is higher than the earthquake early-warning threshold, the earthquake network center 60 will send earthquake early-warning information to the nuclear power plant.

The early-warning information sending module 14 is configured for sending the earthquake early-warning information amounting to the earthquake fortification intensity to the main control room earthquake early-warning module 16. Specifically, the earthquake early-warning information amounting to earthquake fortification intensity refers to the earthquake early-warning information whose estimated earthquake fortification intensity reaches the earthquake fortification intensity. The earthquake fortification intensity of the nuclear power plant is pre-stored in the early-warning information sending module 14. After the the early-warning information sending module 14 receives the earthquake early-warning information sent by the early-warning information receiving module 12, the estimated earthquake intensity is compared with the earthquake fortification intensity, and the earthquake early-warning information that the estimated earthquake fortification intensity amounting to the earthquake fortification intensity is sent to the main control room earthquake early-warning module 16.

The main control room earthquake early-warning module 16 is configured to send an earthquake early-warning sound and light alarm in the main control room. The main control room earthquake early-warning module 16 is an alarm sound and light display device independent of the nuclear power plant control system. Earthquake early-warning warning sound and light alarm is mainly used to remind the main control room operator to pay attention to possible earthquake information and make response preparation in advance.

The early-warning information sending module 14 is also configured to send the earthquake early-warning information to the plant-wide personnel, so as to remind the plant-wide personnel to make corresponding preparations. Specifically, the earthquake early-warning information is sent to plant-wide personel via sending the earthquake early-warning information to plant-wide terminal 18 through the communication system. The earthquake early-warning information sent by the early-warning information sending module 14 to the plant-wide terminals 18 includes all the earthquake early-warning information it has received. In other words, the earthquake early-warning information amounting to or not amounting to the earthquake fortification intensity will be sent to the plant-wide terminals 18.

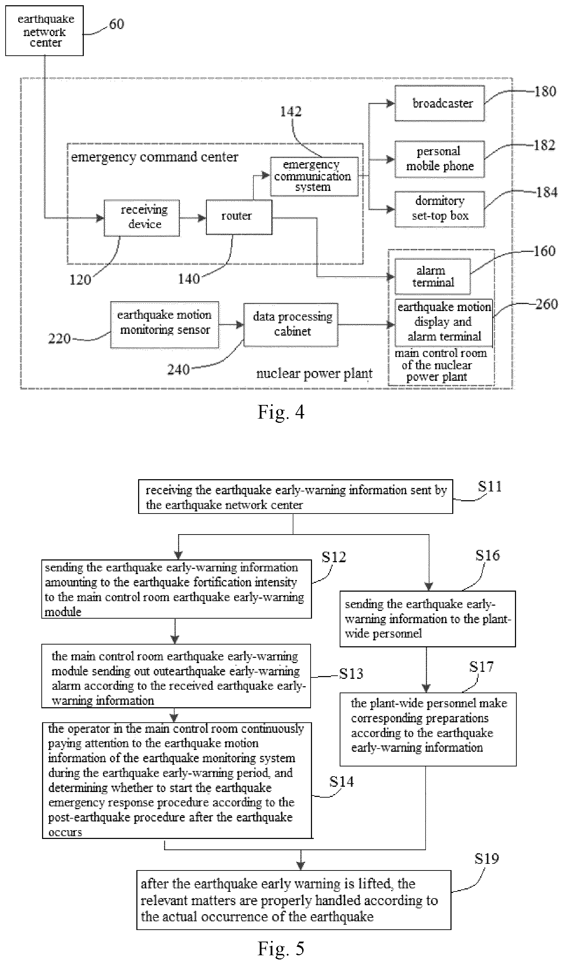

Referring to Fig. 4, in a preferred embodiment of the present invention, the early-warning information receiving module 12 is a receiving device 120, and the early-warning information sending module 14 is a router 140. The receiving device 120 and the router 140 are both set in the emergency command center of the nuclear power plant. The main control room earthquake early-warning module 16 is an alarm terminal 160 located in the main control room. The router 140 sends the earthquake early-warning information to the plant-wide personnel is realized via sending the earthquake early-warning information to the plant-wide terminal 18 through the emergency communication system 142 set up by the emergency command center of the nuclear power plant. Fig. 4 will be described in detail below.

The receiving device 120 receives the earthquake early-warning information sent by the earthquake network center 60, and sends the earthquake to the router 140. The receiving device 120 sets an appropriate receiving manner, such as 2G, 3G, 4G, 5G, or satellite communication, according to the specific manner of the earthquake early-warning information sent by the earthquake network center 60. The manner in which the receiving device 120 sends the earthquake early-warning information to the router 140 may be a cable, an optical cable, or WiFi.

The router 140 screens and distributes the earthquake early-warning information. The distribution method is to send the earthquake early-warning information amounting to the earthquake fortification intensity to the alarm terminal 160 in the main control room, and send all the earthquake early-warning information to the emergency communication system 142 at the same time. The emergency communication system 142 sends earthquake early-warning information to plant-wide terminals 18 through broadcasting, mobile phone short messages, or set-top box network, respectively. The plant-wide terminal 18 includes, but is not limited to, one or more of a plant-wide broadcaster 180, a personnel mobile phone 182, and a dormitory set-top box 184.

It can be seen from the above description that, the earthquake early-warning system 10 of the present invention can inform the operator in the main control room of the nuclear power plant and the plant-wide personnel outside the main control room of the earthquake early warning information in advance, promptly remind the main control operator to pay attention to the earthquake monitoring system of the nuclear power plant, exclude other interfere, promptly remind the workers at high altitude, near the sea or in dangerous areas to evacuate or suspend work, and promptly notify the rest workers in the nuclear power plant to prepare for evacuation and disaster response.

Referring to Fig. 3, the earthquake monitoring system 20 includes an earthquake motion monitoring module 22, an earthquake motion information processing module 24 and an earthquake motion display and alarm module 26.

The earthquake motion monitoring module 22 is configured for monitoring earthquake motion and sending earthquake motion information to the earthquake motion information processing module 24. In the embodiment shown in Fig. 4, the earthquake motion monitoring module 22 is a number of earthquake motion monitoring sensors 220 provided at each earthquake monitoring point in the nuclear power plant.

The earthquake motion information processing module 24 is configured to receive and process the earthquake motion information, and send the processed earthquake motion information to the earthquake motion display and alarm module 26. In the embodiment shown in Fig. 4, the earthquake motion information processing module 24 is provided in a related data processing cabinet 240.

The earthquake motion display and alarm module 26 is arranged in the main control room of the nuclear power plant, and is used for displaying earthquake motion information and sending an earthquake motion alarm. In the embodiment shown in Fig. 4, the earthquake motion display and alarm module 26 is an earthquake motion display and alarm terminal 260, such as a display or an alarm, located in the main control room.

Compared with the prior art, the earthquake early-warning and monitoring system for nuclear power plant of the present invention can integrate the earthquake early-warning information and nuclear power plant earthquake monitoring information effectively. An earthquake early-warning system and an earthquake monitoring system are independent of each other and affirm each other, thereby providing an early-warning for possible earthquakes, and preventing unnecessary shutdown operations.

Referring to Fig. 5, the earthquake early-warning and monitoring method for nuclear power plant of the present invention includes the following steps.

Step S11, receiving the earthquake early-warning information sent by the earthquake network center 60. The earthquake early-warning information includes an estimated earthquake intensity and arrival time, preferably includes the epicenter distance, given by the China Earthquake Network Center 60 according to the longitude and latitude of the nuclear power plant. Specifically, according to the monitoring network data, combined with the pre-stored the longitude and latitude information of the nuclear power plant, the earthquake network center calculates the earthquake early-warning information such as the epicenter distance, estimated earthquake intensity and arrival time in the nuclear power plant area, and send the earthquake early-warning information to the early-warning information receiving module 12 of the nuclear power plant by 2G, 3G, 4G, 5G or satellite communication. The earthquake network center 60 also pre-stores the earthquake early-warning threshold of the nuclear power plant. Only when the estimated earthquake intensity is higher than the earthquake early warning threshold, the earthquake network center 60 will send earthquake early-warning information to the nuclear power plant.

Step S12, sending the earthquake early-warning information amounting to the earthquake fortification intensity to the main control room earthquake early-warning module 16. Specifically, the earthquake early-warning information amounting to the earthquake fortification intensity refers to the earthquake early-warning information that the estimated earthquake intensity reaches the earthquake fortification intensity. The earthquake fortification intensity of the nuclear power plant is pre-stored in the early-warning information sending module 14. After receiving the earthquake information sent by the early-warning information receiving module 12, the early-warning information sending module 14 compares the estimated earthquake intensity with the earthquake fortification intensity, and the earthquake early-warning information that the estimated earthquake intensity amounting to the earthquake fortification intensity is sent to the main control room earthquake early-warning module 16.

Step S13, the main control room earthquake early-warning module 16 sending out a sound and light alarm for earthquake early-warning in the main control room, reminding the operator in the main control room to pay attention to possible earthquake motion information and make response preparation in advance. The main control room earthquake early-warning module 16 is an alarm sound and light display device independent of the nuclear power plant control system.

Step S14, the operator in the main control room continuously paying attention to the earthquake motion information of the earthquake monitoring system during the earthquake early-warning period, and determining whether to start the earthquake emergency response procedure according to the post-earthquake procedure after the earthquake occurs. Specifically, the earthquake motion information of the earthquake monitoring system is displayed by the earthquake motion display and alarm module 26, including but not limited to, the earthquake peak acceleration (PGA) and cumulative absolute velocity (CAV) of the monitoring point.

Step S16, sending the earthquake early-warning information to the plant-wide personnel, and reminding the plant-wide personnel to make corresponding preparations. Step S16 is performed simultaneously with step S12. Specifically, the earthquake early-warning information is sent to the plant-wide via the early-warning information sending module 14 sending the early-warning information to the plant-wide terminal 18 through the communication system. The earthquake early warning information sent by the early warning information sending module 14 to the plant-wide terminals 18 includes all the earthquake early warning information, that is, all the earthquake early warning information amounting to or not amounting to the earthquake fortification intensity will be sent to the plant-wide terminals 18.

Step S17, the plant-wide personnel make corresponding preparations according to the earthquake early-warning information, including but not limited to: evacuation or suspension of work for personnel in high altitude, seaside or dangerous areas of the nuclear power plant, and preparations for evacuation and disaster response for rest personnel in the nuclear power plant.

Step S19, after the earthquake early warning is lifted, the relevant matters are properly handled according to the actual occurrence of the earthquake. The earthquake early-warning is lifted refers to end of the arrival time in the earthquake early warning information and the earthquake wave reaches the nuclear power plant.

Compared with the prior art, the present invention has at least the following advantages:
1) The earthquake early-warning system was introduced into the nuclear power plant for the first time, and the early warning monitoring method combining the earthquake early-warning system and the earthquake monitoring system was provided, which can improve the reliability of the earthquake response of the nuclear power plant;
2) The earthquake early-warning system and the monitoring system are independent of each other, and the warning information of the earthquake early-warning system and the monitoring system can affirm each other, thereby improving the reliability of the earthquake response of the nuclear power plant;
3) The earthquake early-warning information comes from the national earthquake monitoring department. There is no need to set up a separate earthquake motion monitoring network around the nuclear power plant, which reduces the cost of reconstruction and investment of the nuclear power plant, and the earthquake early-warning information is more reliable;
4) A variety of early-warning means such as plant-wide broadcasting, mobile phone text messages and TV set-top boxes are provided, to notify everyone in the power plant to the greatest extent, so as to provide a certain pre-earthquake early warning time for all personnel in the power plant, which can greatly reduce other industrial accidents other than nuclear accident and casualties during strong earthquakes.

The above described embodiments are only preferred embodiments of the present invention, and are not intended to limit the scope of the present invention. Any modification, equivalent replacement and improvement within the spirit and principle of the present invention should be included in the protection scope of the present invention.

## Claims

1. An earthquake early-warning and monitoring system for nuclear power plant, **characterized in that** the earthquake early-warning and monitoring system for nuclear power plant comprises an earthquake early-warning system (10) for sending an earthquake early-warning before an earthquake reaches the nuclear power plant, and an earthquake monitoring system (20) for reflecting actual impact of an earthquake motion on structure and equipment of the nuclear power plant;
the earthquake early-warning system (10) comprises:
an early-warning information receiving module (12), configured for receiving earthquake early-warning information sent by an earthquake network center (60), and sending the earthquake early-warning information to an early-warning information sending module (14);
the early-warning information sending module (14), configured for sending earthquake early-warning information amounting to an earthquake fortification intensity to a main control room earthquake early-warning module (16); and
the main control room earthquake early-warning module (16), configured for sending an earthquake early-warning sound and light alarm in the main control room.

2. The earthquake early-warning and monitoring system for nuclear power plant according to claim 1, **characterized in that** the early-warning information sending module (14) is further configured for sending the earthquake early-warning information to plant-wide personnel, to remind the plant-wide personnel to make corresponding preparation.

3. The earthquake early-warning and monitoring system for nuclear power plant according to claim 2, **characterized in that** the early-warning information receiving module (12) and the early-warning information sending module (14) are set in an emergency command center of the nuclear power plant, and the earthquake early-warning information is sent to the plant-wide personnel via sending the earthquake early-warning information to plant-wide terminals (18) via an emergency communication system in an emergency command center.

4. The earthquake early-warning and monitoring system for nuclear power plant according to claim 2, **characterized in that** the earthquake early-warning information sent by the early-warning information sending module (14) to the plant-wide terminals (18) comprises all earthquake early- warning information received by the early-warning information sending module (14), and the plant-wide terminals (18) comprise at least one of broadcasters, personnel mobile phones, and dormitory set-top boxes throughout the nuclear power plant.

5. The earthquake early-warning and monitoring system for nuclear power plant according to claim 1, **characterized in that** the earthquake early-warning information comprises estimated intensity and arrival time of the earthquake, which is given by the earthquake network center (60) according to pre-stored longitude and latitude of the nuclear power plant.

6. The earthquake early-warning and monitoring system for nuclear power plant according to claim 5, **characterized in that** the earthquake early-warning information amounting to an earthquake fortification intensity refers to the earthquake early-warning information whose estimated earthquake intensity amounting to the earthquake fortification intensity; the earthquake fortification intensity of the nuclear power plant is pre-stored in the early-warning information sending module (14), after the the early-warning information sending module (14) receives the earthquake early-warning information sent by the early-warning information receiving module (12), the estimated earthquake intensity is compared with the earthquake fortification intensity, and the earthquake early-warning information that the estimated earthquake intensity amounting to the earthquake fortification intensity is sent to the main control room earthquake early-warning module (16).

7. The earthquake early-warning and monitoring system for nuclear power plant according to claim 5, **characterized in that** the earthquake network center (60) also pre-stores earthquake early-warning threshold of the nuclear power plant, and only when the estimated earthquake intensity is higher than the earthquake early-warning threshold, the earthquake network center (60) will send earthquake early-warning information to the nuclear power plant.

8. The earthquake early-warning and monitoring system for nuclear power plant according to claim 1, **characterized in that** the main control room earthquake early-warning module (16) is an alarm sound and light display device independent of the nuclear power plant control system.

9. The earthquake early-warning and monitoring system for nuclear power plant according to any one of claims 1 to 8, **characterized in that** the earthquake monitoring system (20) comprises an earthquake motion monitoring module (22), an earthquake motion information processing module (24) and an earthquake motion display and alarm module (26), wherein the earthquake motion monitoring module (22) is configured to monitor the earthquake motion and send the earthquake motion information to the earthquake motion information processing module (24); the earthquake motion information processing module (24) is configured to receive and process the earthquake motion information, and send processed earthquake motion information to the earthquake motion display and alarm module (26); the earthquake motion display and alarm module (26) is configured to display earthquake motion information and send an earthquake motion alarm.

10. An earthquake early-warning and monitoring method for nuclear power plant, **characterized in that** the earthquake early-warning and monitoring method for nuclear power plant comprises the steps of:
receiving earthquake early-warning information sent by an earthquake network center (60);
sending the earthquake early-warning information amounting to an earthquake fortification intensity to a main control room earthquake early-warning module (16);
the main control room earthquake early-warning module (16) sending a sound and light alarm for earthquake early-warning in the main control room, reminding operators in the main control room to pay attention to possible earthquake motion information and prepare for response in advance; and
the operators in the main control room continuously paying attention to the earthquake motion information of the earthquake monitoring system (20) during the earthquake early-warning period, and determining whether to start an earthquake emergency response program according to post-earthquake procedures after an earthquake occurs.

11. The earthquake early-warning and monitoring method for nuclear power plant according to claim 10, **characterized in that**, when the earthquake early-warning information amounting to the earthquake fortification intensity is sent to the main control room earthquake early-warning module (16), the earthquake early-warning information is also sent to plant-wide personnel, and the plant-wide personnel make corresponding preparations according to the earthquake early-warning information.

12. The earthquake early-warning and monitoring method for nuclear power plant according to claim 11, **characterized in that** the earthquake early-warning information is sent to the plant-wide personnel via sending the earthquake early-warning information to plant-wide terminals (18) through emergency communication system in an emergency command center.

13. The earthquake early-warning and monitoring method for nuclear power plant according to claim 11, **characterized in that** the plant-wide personnel making corresponding preparations according to the earthquake early-warning information comprises: evacuation or suspension of work for personnel in high altitude, seaside or dangerous areas of the nuclear power plant, and preparations for evacuation and disaster response for rest personnel in the the nuclear power plant.

14. The earthquake early-warning and monitoring method for nuclear power plant according to claim 10, **characterized in that** the earthquake motion information of the earthquake monitoring system (20) that the operators of the main control room continuously paying attention to during the earthquake early-warning period is earthquake motion information displayed by the earthquake motion display and alarm module (26), comprising earthquake peak acceleration and cumulative absolute velocity of monitoring points.

15. The earthquake early-warning and monitoring method for nuclear power plant according to claim 10, **characterized in that** the earthquake early-warning information comprises estimated intensity and arrival time of the earthquake, which is given by the earthquake network center (60) according to pre-stored longitude and latitude of the nuclear power plant.

16. The earthquake early-warning and monitoring method for nuclear power plant according to claim 15, **characterized in that** the earthquake early-warning information amounting to an earthquake fortification intensity refers to the earthquake early-warning information whose estimated earthquake intensity amounts to the earthquake fortification intensity; the earthquake fortification intensity of the nuclear power plant is pre-stored in the early-warning information sending module (14), after the the early-warning information sending module (14) receives the earthquake early-warning information sent by the early-warning information receiving module (12), the estimated earthquake intensity is compared with the earthquake fortification intensity, and the earthquake early-warning information that the estimated earthquake intensity amounting to the earthquake fortification intensity is sent to the main control room earthquake early-warning module (16).

17. The earthquake early-warning and monitoring method for nuclear power plant according to any one of claims 15 or 16, **characterized in that** the earthquake early-warning and monitoring method for nuclear power plant further comprises: after the earthquake early-warning is lifted, properly handling relevant matters according to actual situation of the earthquake, wherein the earthquake early-warning is lifted refers to end of the arrival time in the earthquake early warning information and the earthquake wave reaches the nuclear power plant.
